# EUROPEAN PATENT APPLICATION

(11) **EP 3 351 434 A1**
(43) Date of publication of application: **25.07.2018**
(21) Application number: 16845722.4
(22) Date of filing: 14.09.2016
(51) Int. Cl.: B60R 21/205, B29C 69/00

(54) **METHOD FOR FORMING DASHBOARD ASSEMBLY AND DASHBOARD ASSEMBLY OBTAINED THEREBY**

(30) Priority: 16.09.2015 CN 201510589804; 16.09.2015 CN 201520717428 U
(71) Applicant: Shanghai Yanfeng Jin Qiao Automotive Trim Systems Co., Ltd., Shanghai 201206 (CN)
(72) Inventor: ZHANG, Guangwei, Shanghai 201206 (CN); HOU, Jianfeng, Shanghai 201206 (CN); ZHANG, Xueyong, Shanghai 201206 (CN); ZHAO, Lan, Shanghai 201206 (CN); ZHENG, Jianyi, Shanghai 201206 (CN); ZHOU, Guirong, Shanghai 201206 (CN); WANG, Wei, Shanghai 201206 (CN)
(74) Representative: Trinks, Ole
(86) International application number: PCT/CN2016/099001
(87) International publication number: WO 2017/045608

(57) **Abstract**

The invention involves a method for forming an instrument panel assembly which comprises fixing a film formed with polypropylene composition on at least part of a partial surface of a movable mold covering an airbag door area; closing the mold, injecting thermoplastic polypropylene material into the mold, fusing the polypropylene composition and the thermoplastic polypropylene material in a contacting area; opening the mold, inserting the film into the backside of the instrument panel body to form an integral instrument panel with the instrument panel body; forming flush airbag door weakening lines on the instrument panel body and the film at the same time; providing an airbag door formed with thermoplastic polyolefin material; welding the airbag door to the instrument panel body and to at least part of the film, and fusing the polypropylene composition and the thermoplastic polyolefin material in the contacting area.

The invention also involves an instrument panel.

## Description

### FIELD

The invention involves an instrument panel assembly of an automobile, and more specifically involves a method for forming an instrument panel assembly and the instrument panel assembly obtained therefrom.

### BACKGROUND

As more attention is paid to the safety performance of automobiles, an airbag protection structure is arranged at the front passenger side on most instrument panels, wherein the area of instrument panel to arrange the airbag protection structure is referred to as an airbag door area, and the airbag door and the instrument panel are together referred to as an instrument panel assembly. A traditional airbag door is welded to the backside of the instrument panel at the airbag door area, so as to connect the airbag door and the instrument panel. When an accident occurs involving the automobile and the airbag is unfolded, there is a potential safety hazard for the instrument panel assembly connected only by welding: desoldering occurs to the airbag door and the instrument panel, the instrument panel is partially broken, and fragments are thrown out with the enormous external force due to airbag unfolding, causing harm to passengers.

To solve the above-mentioned problems, an intermediate medium may be added between the instrument panel body and the airbag door without affecting the welding. Since pre-cutting or pre-weakening for the instrument panel before welding process is required to ensure the instantaneous expansion of the airbag along the weakening trace of the instrument panel airbag door area when the airbag is unfolded, the intermediate medium between the instrument panel body and the airbag door is required to be pre-cut or pre-weakened before being inserted to the instrument panel body, and to be cut or weakened for the second time along the pre-cutting or pre-weakening line of the film after the instrument panel body and the film insert is integrally formed by injection molding so as to form on the instrument panel body the cutting lines or weakening lines aligned with the pre-cutting or pre-weakening lines on the film. However, it complicates the production process, and increases the productivity labor hour and the production cost of product.

### SUMMARY

To solve the above-mentioned problems of fragments thrown out due to desoldering and production cost increase due to secondary cutting, the invention is aimed to provide a method for forming an instrument panel assembly and the instrument panel assembly obtained therefrom.

The invention provides a method for forming an instrument panel assembly, comprising the following steps: S1, providing an instrument panel body mold with a movable mold and a stationary mold, and fixing a film formed with polypropylene composition on at least part of a partial surface of the movable mold covering an airbag door area of an instrument panel body; S2, closing the mold and injecting thermoplastic polypropylene material into the instrument panel body mold to melt the film with the temperature of the thermoplastic polypropylene material and fusing the polypropylene composition and the thermoplastic polypropylene material in a contacting area; S3, opening the mold to obtain the instrument panel body formed with thermoplastic polypropylene material, wherein the film is inserted into the backside of the instrument panel body to form an integral instrument panel with the instrument panel body; S4, weakening the airbag door area of the instrument panel, and forming flush airbag door weakening lines on the instrument panel body and the film at the same time by the weakening; S5, providing an airbag door formed with thermoplastic polyolefin material; and S6, welding the airbag door to the instrument panel body and at least part of the film, and fusing the polypropylene composition and the thermoplastic polyolefin material in the contacting area.

The film of the step S1 is not pre-cut or pre-weakened.

The polypropylene composition to form film in the step S1 comprises the following components by weight: 45 parts-75 parts of polypropylene; 10 parts-35 parts of elastomer; and 5 parts-20 parts of polyethylene.

The polypropylene is a homo-polypropylene with an isotacticity index of 94%-98% and a melt flow rate of 1g/10min-5g/10min at 230°C and under a load of 2.16kg.

The elastomer is selected from: ethylene-hexene copolymer, ethylene-butene copolymer and ethylene-octene copolymer, with a density of 0.850g/cm³-0.865g/cm³ and a melt flow rate of 0.1g/10min-3g/10min at 190°C and under a load of 2.16kg.

The polyethylene is a high density polyethylene with a density of 0.94g/cm³-0.97g/cm³ and a melt flow rate of 0.01g/10min-0.5g/10min at 190°C and under a load of 2.16kg.

0.1 parts-0.5 parts of antioxidant and 0.1 parts-0.5 parts of lubricant by weight are also comprised based on the whole polypropylene composition.

The antioxidant is a compound of hindered phenolic antioxidant and phosphite antioxidant with a ratio of 1:1-2.

The lubricant is one of polyethylene wax and oxidized polyethylene wax or mixture of the two.

The thermoplastic polypropylene material to form instrument panel body in the step S2 is selected from: PP-EPDM-M20, PP-M20, PP-GF15, PP-GF30 and PP-MD25-GF15.

The weakening in the step S4 is performed with laser weakening process or milling cutter weakening process.

The welding in the step S6 is performed with vibration and friction welding, infrared welding or ultrasonic welding processes.

The invention also provides an instrument panel assembly comprising: an instrument panel body formed with thermoplastic polypropylene material; a film formed with a polypropylene composition, and an airbag door formed with thermoplastic polyolefin material, wherein the film is inserted into the backside of the instrument panel body in at least part of an area covering the airbag door to form an integral instrument panel with the instrument panel body, wherein the instrument panel body and the film are fused in a contacting area; wherein the airbag door is welded to the instrument panel body and at least part of the film, wherein the airbag door and the film are fused in the contacting area; and wherein the instrument panel body and the film have flush airbag door weakening lines formed at the same time in one weakening.

The film does not have a pre-cutting line or pre-weakening line.

The film may partially cover the weakening lines of the airbag door.

The film may fully cover the weakening lines of the airbag door.

The airbag door and the instrument panel may form a welding rib in welding process, and the film may partially cover the welding rib.

The film may fully cover the weakening lines of the welding rib.

The thickness of the film is between 0.01mm and 1.00mm.

Through fusing the film material, part of which is covering the airbag door area and inserted to the backside of the instrument panel body so as to form an integral instrument panel with the instrument panel body, and the airbag door material, the invention enhances the strength of the instrument panel assembly and restrains the fragments with the film when the instrument panel body is broken, so as to prevent harm to the passenger due to fragments thrown out caused by rapid unfolding of the airbag door and interference and collision of the structure of a windshield or an instrument panel, and to fulfill the safety requirements brought by the complex automobile instrument panel structure design.

### BRIEF DESCRIPTION OF THE DRAWINGS

Figure 1 is a top view of an instrument panel inserted with film according to the invention.
Figure 2 is a sectional view taken along line A-A of Figure 1.
Figure 3 is a diagram similar to Figure 2 showing the weakening lines of the instrument panel according to the invention.
Figure 4 is a sectional view taken after the instrument panel according to the invention is welded with an airbag door.

### DETAILED DESCRIPTION OF THE INVENTION

The preferred embodiments are provided and described in detail with reference to the accompanying drawings.

The method for forming an instrument panel assembly provided by this invention comprises: providing an instrument panel body mold with a movable mold and a stationary mold with the movable mold side corresponding to the back side of the instrument panel body and the stationary mold side corresponding to the front side of the instrument panel body, and fixing a film to the cavity inner wall of the movable mold of the instrument panel body by manipulator as the film is not pre-cut or pre-weakened yet; closing the mold and injecting instrument panel body material to the instrument panel body mold to melt the film with melted instrument panel body material of high temperature in the mold cavity so as to ensure the film material and the instrument panel body material are fused in a contacting area and to maintain the film position stability since the film would not move with the injected plastic stream and instead would always be attached to the mold cavity wall due to its low flowability caused by the low melt index of the film material. The instrument panel body material may comprise thermoplastic polypropylene material, comprising but not limited to PP-EPDM-M20, PP-M20, PP-GF15, PP-GF30 and PP-MD25-GF15. PP-EPDM-M20 refers to a mixture of polypropylene, ethylene propylene diene monomer elastomer and inorganic mineral filling (the mass of the filling accounts for 20%). PP-M20 refers to a mixture of polypropylene and inorganic mineral filling (the mass of the filling accounts for 20%). PP-GF15 refers to a mixture of polypropylene and glass fiber filling (the mass of the filling accounts for 15%). PP-GF30 refers to a mixture of polypropylene and glass fiber filling (the mass of the filling accounts for 30%). PP-MD25-GF15 refers to a mixture of polypropylene, inorganic mineral filling (the mass of the filling accounts for 25%) and glass fiber filling (the mass of the filling accounts for 15%).

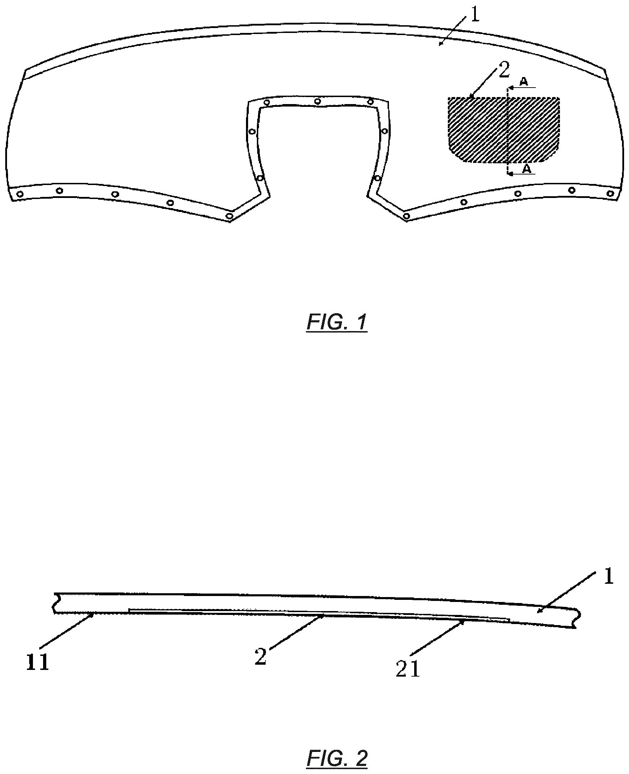

When the above-mentioned injection molding process is completed, the instrument panel is obtained by mold opening as shown in Figure 1 and Figure 2, and a film 2 is inserted to the backside of an instrument panel body 1 to form an integral instrument panel with instrument panel body 1 by injection molding. A backside 11 of instrument panel body 1 is flush with a surface 21 of film 2, such that the thickness of instrument panel 1 in an airbag door area is even after injection molding. Film 2 is not pre-cut or pre-weakened before injection molding.

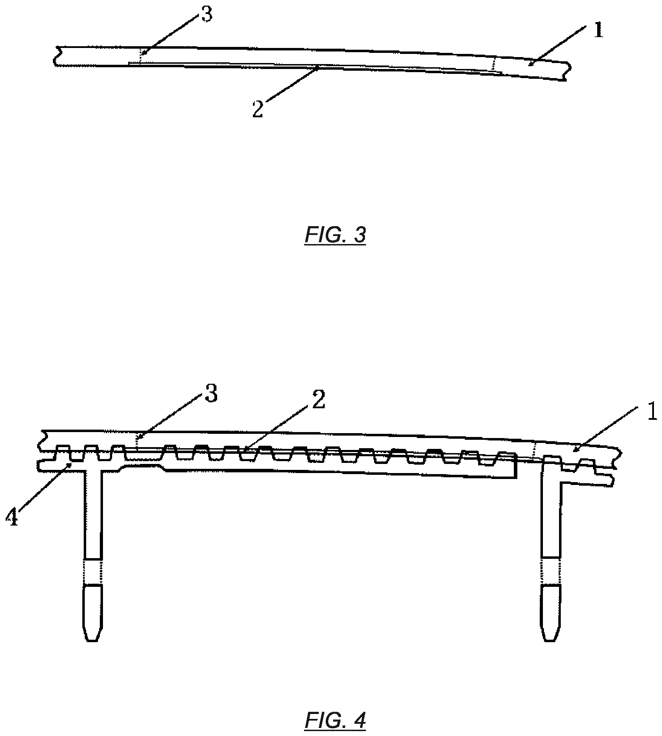

Then, weakening is performed in the airbag door area of the instrument panel backside, i.e. forming flush airbag door weakening lines 3 on instrument panel body 1 and film 2 at the same time. As shown in Figure 3, since the material of film 2 is a polypropylene compound which is similar to the thermoplastic polypropylene material of instrument panel 1, the material of film 1 and the material of instrument panel 1 are highly compatible; therefore, film 2 is not pre-cut or pre-weakened before being inserted into the instrument panel body mold, and can be weakened together with instrument panel body 1. Through such an instrument panel assembly production method, integral weakening of the instrument panel airbag door area is realized. The weakening process comprises but is not limited to laser weakening process and milling cutter weakening process. Moreover, film 2 is not pre-cut or pre-weakened before being inserted into the instrument panel body mold, and the position of film 2 can fully or partially cover the weakening lines of the airbag door area of instrument panel 1.

An airbag door 4 is welded to instrument panel body 1 and at least part of film 2. The welding process comprises but is not limited to vibration and friction welding, infrared welding and ultrasonic welding, etc., and the position selection of the film need not avoid a welding rib of the product. The material of film 2 and the material of airbag door 4 are fused in the contacting area as shown in Figure 4.

Airbag door 4 is a fixed-type airbag door or hooking-type airbag door. In such manner, the instrument panel assembly is formed.

The instrument panel assembly production method does not affect the injection molding, weakening, welding, surface spraying, surface flame treatment, surface foaming and surface coating processes in the production process of the instrument panel and the product appearance, etc. Through adding an extra film in the airbag door area of the instrument panel, the mechanical strength, the slow/high speed impact resistance after low temperature/normal temperature/high temperature/aging cycle and the welding strength of the instrument panel and the airbag door can be effectively improved, and the safety effect of the instrument panel in a head-on collision test and airbag deployment test can be improved; when the airbag door is unfolded and interference and collision occurs in the structure of windshield or instrument panel, it is ensured that the instrument panel is not broken or thrown out at the collision position, so that the safety requirements brought by the complex automobile instrument panel structure design is fulfilled and the safety of the passengers is more effectively ensured. Moreover, the film involved in this instrument panel assembly production method, with a thickness of between 0.01mm and 1.00mm, is at the backside of the airbag door area of the instrument panel, and does not affect the product appearance; it can fulfill the relevant production process requirements of the instrument panel, has good production flexibility, and can be widely applied in the production of hard/soft instrument panel and instrument panel with seamed/seamless airbag, wherein the applicable airbag door is of U-type, Y-type and H-type, etc.

The applicant has found that, if the ordinary film material [high density polyethylene (HDPE)/polyvinylchloride (PVC)/polyamide (PA)] is inserted in the movable mold and molded with the instrument panel body material by injection molding, ordinary film from the market can be easily peeled from or fall off the bonding surface of the instrument body, and detachment or bubble occurs between the contacting surfaces of the film and the instrument panel body, affecting the weakening process of the instrument panel body and weakening hole residual thickness stability of the instrument panel body; moreover, if ordinary film from the market is selected, the welding strength between the instrument panel and the airbag door and the welding pull-off force in the airbag door area of the instrument panel are decreased, desoldering easily occurs between the instrument panel and the airbag door during airbag deployment, and the instrument panel may be partially broken or thrown out with the enormous external force due to airbag unfolding, and there is a potential safety hazard. The film formed with polypropylene composition solves the above-mentioned problems.

Experimental results show that the preferred polypropylene composition comprises the following components by weight: 45 parts-75 parts of polypropylene; 10 parts-35 parts of elastomer; and 5 parts-20 parts of polyethylene. The more preferred polypropylene composition comprises 0.1 parts-0.5 parts of antioxidant and 0.1 parts-0.5 parts of lubricant by weight. For the most preferred polypropylene composition, the half-peak width of the polypropylene crystallization peak is 5°C-10°C, and the peak temperature of the polypropylene crystallization peak is preferred to be 105°C-115°C; the half-peak width of the crystallization peak and the peak temperature of the crystallization peak is obtained through tests following the standard ISO 11357 with a cooling rate of 10°C /min. The polypropylene is a homo-polypropylene with an isotacticity index of 94%-98% and a melt flow rate of 1g/10min-5g/10min at 230°C and under a load of 2.16kg; the elastomer is selected from: ethylene-hexene copolymer, ethylene-butene copolymer and ethylene-octene copolymer, with a density of 0.850g/cm³-0.865g/cm³ and a melt flow rate of 0.1g/10min-3g/10min at 190°C and under a load of 2.16kg; the polyethylene is a high density polyethylene with a density of 0.94g/cm³-0.97g/cm³ and a melt flow rate of 0.01g/10min-0.5g/10min at 190°C and under a load of 2.16kg; the antioxidant is a compound of hindered phenolic antioxidant and phosphate antioxidant with a ratio of 1:1-2; and the lubricant is one of polyethylene wax and oxidized polyethylene wax or mixture of the two. The above-mentioned components are produced as particles of raw material with twin screw extruding equipment, which leads to a good compatibility between the instrument body material and the airbag panel material; then, the particles of the raw material are produced as film with the cast extruding equipment or the calender equipment, and the film has features such as low thickness, low flowability, low vicat softening temperature, low melting point and good flexibility, elongation at break and low/high speed impact resistance, etc.; Examples of film raw material are shown below to describe the film material in detail, and not to limit.

Polypropylene 1: the isotacticity is 94%, MFR (230°C, 2.16kg) is 1.0g/10min, the half-peak width the polypropylene crystallization peak is 5°C, and the peak temperature of the polypropylene crystallization peak is 110°C.

Polypropylene 2: the isotacticity is 95%, MFR (230°C, 2.16kg) is 3.0g/10min, the half-peak width the polypropylene crystallization peak is 7.3°C, and the peak temperature of the polypropylene crystallization peak is 105°C.

Polypropylene 3: the isotacticity is 98%, MFR (230°C 2.16kg) is 5.0g/10min, the half-peak width the polypropylene crystallization peak is 10°C, and the peak temperature of the polypropylene crystallization peak is 108°C.

Ethylene-hexene copolymer: the density is 0.860g/cm³ and MFR (190°C, 2.16kg) is 0.5g/10min.

Ethylene-butene copolymer: the density is 0.865g/cm³ and MFR (190°C, 2.16kg) is 0.5g/10min.

Ethylene-octene copolymer: the density is 0.855g/cm³ and MFR (190°C, 2.16kg) is 1.0g/10min.

High density polyethylene 1: the density is 0.94g/cm³ and MFR (190°C, 2.16kg) is 0.01g/10min.

High density polyethylene 2: the density is 0.95g/cm³ and MFR (190°C, 2.16kg) is 0.05g/10min.

High density polyethylene 3: the density is 0.97g/cm³ and MFR (190°C, 2.16kg) is 0.5g/10min.

Antioxidant: the antioxidant is a compound of hindered phenolic antioxidant 1010 and phosphite antioxidant 168 with a ratio of 1:1. The scientific name of the antioxidant 1010: tetra[β-(3,5-di-tert-butyl-4-hydroxyphenyl)propionate] pentaerythritol; the scientific name of the antioxidant 168: tris(2,4-di-tert-butyl) phenyl phosphite.

### Example 1

The components are weighed according to the weight parts shown in Table 1, and polypropylene, elastomer and high density polyethylene are mixed for 3 minutes in the high-speed mixer at first and then for 2 more minutes after the antioxidant and the lubricant are added with a rotation speed of 2000r/min so as to obtain the premix; the premix is melted and extruded by a twin screw extruder with the screw temperature of each zone maintained within 190-230°C, and is produced as a polypropylene composition with good low-temperature toughness by vacuum granulation; the corresponding test strips are produced according the standards, and the mechanical performance and the gloss are measured. The specific values are listed in Table 2, while the test standards are listed in Table 3.

**Table 1 Composition of Film Material**

| Number | Embodiment (parts by weight) | | | |
|---|---|---|---|---|
| Material | 1 | 2 | 3 | 4 |
| Polypropylene 1 | 74.6 | -- | -- | -- |
| Polypropylene 2 | -- | 56.3 | -- | -- |
| Polypropylene 3 | -- | -- | 45.2 | 54.1 |
| Ethylene-hexene copolymer | 20 | -- | -- | 10 |
| Ethylene-butene copolymer | -- | -- | 35 | 15 |
| Ethylene-octene copolymer | -- | 25 | -- | -- |
| High density polyethylene 1 | 5 | -- | -- | -- |
| High density polyethylene 2 | -- | 18 | -- | 20 |
| High density polyethylene 3 | -- | -- | 19 | -- |
| Antioxidant | 0.2 | 0.3 | 0.4 | 0.4 |
| Polyethylene wax | 0.2 | 0.4 | 0.4 | 0.2 |
| Oxidized polyethylene wax | -- | -- | -- | 0.3 |

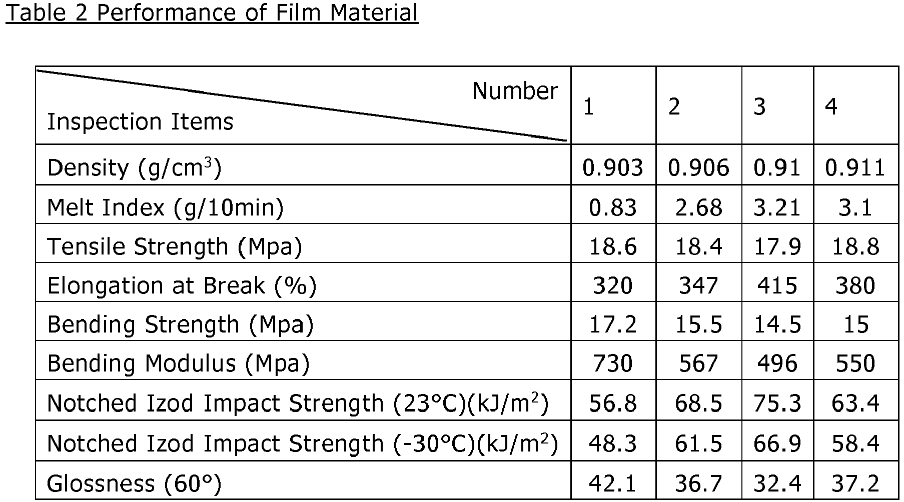

**Table 3 Testing Standards of Film Material**

| Testing Items | Units | Testing Standards |
|---|---|---|
| Melt Flow Rate | g/10min | ISO 1133 |
| Density | g/cm³ | ISO 1183 |
| Tensile Strength | MPa | ISO 527-1, 527-2 |
| Elongation at Break | % | ISO 527-1, 527-2 |
| Bending Strength | MPa | ISO 178 |
| Bending Modulus | MPa | ISO 178 |
| Notched Izod Impact Strength (23°C) | kJ/m² | ISO 180 |
| Notched Izod Impact Strength (-30°C) | kJ/m² | ISO 180 |
| Glossness (60°) | | ASTM D523 |

It should understood that the film is incorporated into the backside of the instrument panel body by insert molding; depending on actual demand, the incorporation area can be the whole airbag door area of the instrument panel, partial weakening line area of the airbag door near the passenger side, or partial hinge weakening line area of the airbag door near the windshield side, etc.; the shape of the inserted film can be an integral piece of film, or the film can be partially cut-out to insert into the backside of the instrument panel body; also, the film can be divided into two or more pieces so as to insert into the backside of the instrument panel body.

The instrument panel assembly formed with the above-mentioned method of this invention comprises: an instrument panel body 1 formed with thermoplastic polypropylene material; film 2 formed with polypropylene composition, which is inserted into the backside of the instrument panel body 1 in at least part of the area covering airbag door to form an integral instrument panel with the instrument panel body 1, wherein the instrument panel body 1 and the film 2 are fused in the contacting area; and an airbag door 4 formed with thermoplastic polyolefin material, which is welded to the instrument panel body 1 and at least part of the film 2, wherein the airbag door 4 and the film 2 are fused in the contacting area; wherein, the instrument panel body 1 and the film 2 have flush airbag door weakening lines 3 formed at the same time in one weakening. The film 2 does not have a pre-cutting line or pre-weakening line. The film covers the weakening lines of the airbag door partially. The film covers the weakening lines of the airbag door fully. The airbag door and the instrument panel form a welding rib in welding process, and the film may partially cover the welding rib. The film may fully cover the welding rib. The thickness of the film is between 0.01mm and 1.00mm.

With the method for forming an instrument panel assembly, the film is between the instrument panel and the airbag door, and serves as a bridge if there is a welding rib, increasing the welding strength of the instrument panel and the airbag door and ensuring the stability of the airbag door area welding strength; if there is no welding rib, due to its good flexibility, elongation at break and low/high speed impact resistance, etc., the film covers the backside of the instrument panel well, and forms a good malleable layer on the instrument panel backside. The integral impact resistance of the airbag door area is improved; the partial breaking of the instrument panel and fragment thrown out due to collision after airbag unfolding is prevented; the design requirements of complex automobile instrument panel structure are fulfilled in a better way, the complex production process requirements of instrument panel are fulfilled at the same time, and the safety of the instrument panel is enhanced.

The above-mentioned are merely the preferred embodiments of the invention. The invention scope is not so limited and many variations may be made to the above-mentioned embodiments of the invention. All the simple modifications, changes and embellishments of the above-mentioned embodiments according to the claims and description of the invention shall fall within the protection scope of the invention. The content that has not been described in detail is about conventional techniques.

## Claims

1. A method for forming instrument panel assembly, comprising the following steps:
S1) providing an instrument panel body mold with a movable mold and a stationary mold, and film formed with polypropylene composition being relatively fixed on at least part of the partial surface of the movable mold covering airbag door area;
S2) mold closing, which is to inject thermoplastic polypropylene material to the body mold of instrument panel, to melt the film with the temperature of thermoplastic polypropylene material, and to fuse the polypropylene composition and the thermoplastic polypropylene material in the contacting area;
S3) mold opening, which is to obtain the instrument panel body formed with thermoplastic polypropylene material, wherein the film is inserted into the backside of the instrument panel body to form an integral instrument panel with the instrument panel body;
S4) weakening in the airbag door area of the instrument panel, and forming flush airbag door weakening lines on the instrument panel body and the film at the same time by the weakening;
S5) providing an airbag door formed with thermoplastic polyolefin material; and
S6) welding the airbag door to the instrument panel body and at least part of the film, and fusing the polypropylene composition and the thermoplastic polyolefin material in the contacting area.

2. The method of Claim 1, wherein the film of the step S1 is not pre-cut or pre-weakened.

3. The method of Claim 1, wherein the polypropylene composition to form film in the step S1 comprises the following components by weight: 45 parts-75 parts of polypropylene; 10 parts-35 parts of elastomer; and 5 parts-20 parts of polyethylene.

4. The method of Claim 3, wherein the polypropylene is a homo-polypropylene with an isotacticity index of 94%-98% and a melt flow rate of 1g/10min-5g/10min at 230°C and under a load of 2.16kg.

5. The method of Claim 3, wherein the elastomer is selected from: ethylene-hexene copolymer, ethylene-butene copolymer and ethylene-octene copolymer, with a density of 0.850g/cm³-0.865g/cm³ and a melt flow rate of 0.1g/10min-3g/10min at 190°C and under a load of 2.16kg.

6. The method of Claim 3, wherein the polyethylene is a high density polyethylene with a density of 0.94g/cm³-0.97g/cm³ and a melt flow rate of 0.01g/10min-0.5g/10min at 190°C and under a load of 2.16kg.

7. The method of Claim 3, wherein 0.1 parts-0.5 parts of antioxidant and 0.1 parts-0.5 parts of lubricant by weight part are also comprised based on the whole polypropylene composition.

8. The method of Claim 7, wherein the antioxidant is a compound of hindered phenolic antioxidant and phosphite antioxidant with a ratio of 1:1-2.

9. The method of Claim 7, wherein the lubricant is one of polyethylene wax and oxidized polyethylene wax or mixture of the two.

10. The method of Claim 1, wherein the thermoplastic polypropylene material to form instrument panel body in the step S2 is selected from: PP-EPDM-M20, PP-M20, PP-GF15, PP-GF30 and PP-MD25-GF15.

11. The method of Claim 1, wherein the weakening in the step S4 is performed with laser weakening process or milling cutter weakening process.

12. The method of Claim 1, wherein the welding in the step S6 is performed with vibration and friction welding, infrared welding or ultrasonic welding processes.

13. An instrument panel assembly, further comprising:
- an instrument panel body formed with thermoplastic polypropylene material;
- film formed with polypropylene composition, which is inserted into the backside of the instrument panel body in at least part of the area covering an airbag door to form an integral instrument panel with the instrument panel body, wherein the instrument panel body and the film are fused in the contacting area; and
- an airbag door formed with thermoplastic polyolefin material, which is welded to the instrument panel body and at least part of the film, wherein the airbag door and the film are fused in the contacting area;
wherein, the instrument panel body and the film have flush airbag door weakening lines formed at the same time in one weakening.

14. The instrument panel assembly of Claim 13, wherein the film does not have a pre-cutting line or pre-weakening line.

15. The instrument panel assembly of Claim 13, wherein the film covers the weakening lines of the airbag door partially.

16. The instrument panel assembly of Claim 13, wherein the film covers the weakening lines of the airbag door fully.

17. The instrument panel assembly of Claim 13, wherein the airbag door and the instrument panel form welding rib in welding process, and the film covers the welding rib partially.

18. The instrument panel assembly of Claim 13, wherein the film covers the welding rib fully.

19. The instrument panel assembly of Claim 13, wherein the thickness of the film is 0.01-1.00mm
